# EUROPÄISCHE PATENTSCHRIFT

(11) **EP 0 929 759 B1**
(45) Veröffentlichungstag und Bekanntmachung des Hinweises auf die Patenterteilung: **28.06.2000**
(21) Anmeldenummer: 97909141.0
(22) Anmeldetag: 18.09.1997
(51) Int. Cl.: F16F 9/04

(54) **LUFTFEDER**
PNEUMATIC SPRING
RESSORT PNEUMATIQUE

(30) Priorität: 30.09.1996 DE 19640056
(43) Veröffentlichungstag der Anmeldung: 21.07.1999
(73) Patentinhaber: PHOENIX AKTIENGESELLSCHAFT, 21079 Hamburg (DE)
(72) Erfinder: BERG, Jürgen, D-22885 Barsbüttel (DE)
(86) Internationale Anmeldenummer: DE9702100
(87) Internationale Veröffentlichungsnummer: WO9814717

(56) Entgegenhaltungen:
- DE-A- 4 118 576
- DE-A- 4 118 577
- US-A- 3 130 965
- US-A- 3 351 337

## Beschreibung

Die Erfindung betrifft eine Luftfeder, umfassend einen Schlauchrollbalg (Luftfederbalg) aus elastomerem Werkstoff, der insbesondere mit Festigkeitsträgern versehen ist, wobei die Enden des Schlauchrollbalges auf ein Anschlußteil geschoben und dort mittels eines radial verformbaren Spannringes, der insbesondere aus Metall besteht, befestigt sind (DE-A-36 43 073).

In der Offenlegungsschrift DE-A-21 17 259 ist der Luftfederbalg an den äußeren Enden aufgedickt. Durch konische Anschlußteile soll die Befestigung bei Zugbeanspruchung noch fester sein. Nachteil dieser Ausführung ist der erhöhte Aufwand bei der Herstellung dieser Luftfederbälge. Ein weiterer Nachteil liegt darin, daß der Luftfederbalg durch die konische Einspannung bei Zugbeanspruchung seine Position verändert und somit auch die Konstruktionslage des Balges verschoben wird.

In der Auslegungsschrift DE-B-11 52 316 wird ein Luftfederbalg mit einvulkanisierten Kernringen beschrieben. Der Luftfederbalg wird dabei auf bzw. in konischen Zylindern montiert und durch einen Stützring und eine Sicke zusätzlich gesichert. Der Nachteil dieser Lösung liegt in dem hohen Aufwand für die Herstellung und die Montage des Balges durch eine in einem Topf liegende Befestigung.

Eine besonders kritische Stelle bei Luftfedern ist der Verbindungsbereich von Anschlußteil, Schlauchrollbalg und Spannring, insbesondere unter den Gesichtspunkten
- des Einflusses von Materialschwankungen;
- des Einflusses des Konfektionsdurchmessers des Luftfederbalges im Verhältnis zum Aufspanndurchmesser des Anschlußteils;
- des Einsatzes der Luftfeder bei unterschiedlichen Temperaturen in Verbindung unterschiedlicher Werkstoffe von Anschlußteil, Schlauchrollbalg und Spannring sowie
- der Gesamtstärke des Schlauchrollbalges im Verhältnis zum Festigkeitsträger, wobei der Anteil des Elastomers reduziert ist bzw. durch die Eigenreibung noch weiter reduziert wird.

Im Rahmen einer Weiterentwicklung besteht nun die Aufgabe darin, die Dichtigkeit des Schlauchrollbalges im Bereich des Spannringes zu verbessern.

Gelöst wird diese Aufgabe dadurch, daß das Anschlußteil und/oder der Spannring im Bereich der Einspannung mit einem Elastomerstreifen aufgedickt ist, wobei der Elastomerstreifen in Bezug auf den Schlauchrollbalg ein separates Bauteil ist. Dabei ist unter dem Begriff "separates Bauteil" hier zu verstehen, daß der Elastomerstreifen herstellungsbedingt ein vom Luftfederbalg getrenntes Bauteil ist, und zwar im Gegensatz zu den Ausführungsformen gemäß DE-A-21 17 259 und DE-B-11 52 316.

Zweckmäßigerweise kommen dabei folgende Varianten zum Einsatz:
A) Der Spannring weist einen anvulkanisierten oder aufgeklebten Elastomerstreifen auf, der dem Schlauchrollbalg zugewandt ist.
B) Zwischen dem Schlauchrollbalg und dem Anschlußteil ist ein Elastomerstreifen vorhanden, der insbesondere in einer Nut des Anschlußteiles einsitzt. Dabei kann der Elastomerstreifen mit dem Anschlußteil verklebt sein.
C) Der Spannring weist einen Elastomerstreifen auf, der mittels Kragen den Spannring umgreift und dabei dem Schlauchrollbalg zugewandt ist. Zusätzlich kann der Elastomerstreifen mit dem Spannring verklebt sein.
D) Der Elastomerstreifen ist als U-Profil ausgeführt und umschließt dabei das Ende des Schlauchrollbalges, womit eine beidseitige Aufdickung verbunden ist.

Unabhängig von diesen Varianten ist es vorteilhaft, wenn die Stärke der Elastomerstreifen 30 % bis 150 %, insbesondere 40 % bis 90 %, der normalen Balgstärke beträgt, und zwar bezogen auf den unbelasteten Zustand.

Die Erfindung wird nun anhand von Ausführungsbeispielen unter Bezugnahme auf schematische Zeichnungen erläutert. Es zeigen:
Fig. 1 eine Luftfeder gemäß Variante A;
Fig. 2 eine Luftfeder gemäß Variante B;
Fig. 3 eine Luftfeder gemäß Variante C;
Fig. 4 eine Luftfeder gemäß Variante D.

In Verbindung mit diesen Figuren gilt folgende Bezugsziffernliste:
1 Anschlußteil mit Nut
2 Schlauchrollbalg
3 Spannring
4 Elastomerstreifen
4' Elastomerstreifen
4" Elastomerstreifen mit Kragen
4"' Elastomerstreifen als U-Profil

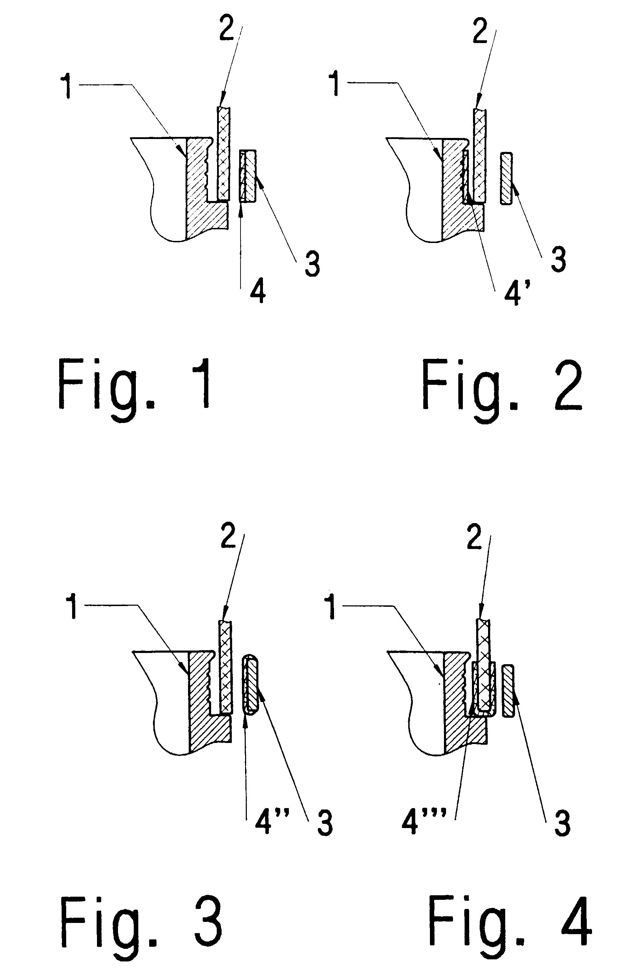

Nach Fig. 1 weist der Spannring **3** einen anvulkanisierten oder aufgeklebten Elastomerstreifen **4** auf, der dem Schlauchrollbalg **2** zugewandt ist.

Nach Fig. 2 befindet sich zwischen dem Schlauchrollbalg **2** und dem Anschlußteil **1** ein Elastomerstreifen **4**', der in einer Nut des Anschlußteiles einsitzt.

Nach Fig. 3 weist der Spannring **3** einen Elastomerstreifen **4**" auf, der mittels Kragen den Spannring **3** umgreift und dabei dem Schlauchrollbalg **2** zugewandt ist. Der Vorteil dieser Variante besteht darin, daß der Elastomerstreifen **4**" als separates Bauteil hergestellt werden kann.

Nach Fig. 4 ist der Elastomerstreifen **4**"' als U-Profil ausgeführt und umschließt dabei das Ende des Schlauchrollbalges **2**, womit eine beidseitige Aufdickung verbunden ist.

## Patentansprüche

1. Luftfeder, umfassend einen Schlauchrollbalg (2) aus elastomerem Werkstoff, der insbesondere mit Festigkeitsträgern versehen ist, wobei die Enden des Schlauchrollbalges auf ein Anschlußteil (1) geschoben und dort mittels eines radial verformbaren Spannringes (3), der insbesondere aus Metall besteht, befestigt sind, dadurch gekennzeichnet, daß das Anschlußteil und/oder der Spannring im Bereich der Einspannung mit einem Elastomerstreifen (4, 4', 4", 4"') aufgedickt ist, wobei der Elastomerstreifen in Bezug auf den Schlauchrollbalg (2) ein separates Bauteil ist.

2. Luftfeder nach Anspruch 1, dadurch gekennzeichnet, daß der Spannring (3) einen anvulkanisierten oder aufgeklebten Elastomerstreifen (4) aufweist, der dem Schlauchrollbalg (2) zugewandt ist.

3. Luftfeder nach Anspruch 1, dadurch gekennzeichnet, daß sich zwischen dem Schlauchrollbalg (2) und dem Anschlußteil (1) ein Elastomerstreifen (4') befindet, der insbesondere in einer Nut des Anschlußteiles einsitzt.

4. Luftfeder nach Anspruch 3, dadurch gekennzeichnet, daß der Elastomerstreifen (4') mit dem Anschlußteil (1) verklebt ist.

5. Luftfeder nach Anspruch 1, dadurch gekennzeichnet, daß der Spannring (3) einen Elastomerstreifen (4") aufweist, der mittels Kragen den Spannring (3) umgreift und dabei dem Schlauchrollbalg (2) zugewandt ist.

6. Luftfeder nach Anspruch 5, dadurch gekennzeichnet, daß der Elastomerstreifen (4") mit dem Spannring (3) verklebt ist.

7. Luftfeder nach Anspruch 1, dadurch gekennzeichnet, daß der Elastomerstreifen (4"') als U-Profil ausgeführt ist und dabei das Ende des Schlauchrollbalges (2) umschließt.

8. Luftfeder nach einem der Ansprüche 1 bis 7, dadurch gekennzeichnet, daß die Stärke des Elastomerstreifens (4, 4', 4", 4"') im Bereich des Spannringes (3) 30 % bis 150 % der normalen Balgstärke beträgt, und zwar bezogen auf den unbelasteten Zustand.

9. Luftfeder nach Anspruch 8, dadurch gekennzeichnet, daß die Stärke des Elastomerstreifens (4, 4', 4", 4"') im Bereich des Spannringes (3) 40 % bis 90 % der normalen Balgstärke beträgt, und zwar bezogen auf den unbelasteten Zustand.

## Claims

1. An airspring comprising a hoseroll bellows (2) of elastomeric material which is provided in particular with strength bearers, the ends of the hoseroll bellows being pushed onto a connector part (1) and fastened there by means of a radially deformable clamping-ring (3) which consists especially of metal, characterized in that the connector part and/or the clamping-ring is thickened in the region of the clamping with an elastomeric strip (4,4',4",4'") which is a separate component from the hoseroll bellows (2).

2. An airspring as in Claim 1, characterized in that the clamping-ring (3) exhibits next the hoseroll bellows (2) an elastomeric strip (4) which is vulcanized or glued on.

3. An airspring as in Claim 1, characterized in that between the hoseroll bellows (2) and the connector part (1) there is an elastomeric strip (4') which in particular is seated in a groove in the connector part.

4. An airspring as in Claim 3, characterized in that the elastomeric strip (4') is glued to the connector part (1).

5. An airspring as in Claim 1, characterized in that the clamping-ring (3) exhibits an elastomeric strip (4") which embraces the clamping-ring (3) by means of collars and thereby lies next the hoseroll bellows (2).

6. An airspring as in Claim 5, characterized in that the elastomeric strip (4") is glued to the clamping-ring (3).

7. An airspring as in Claim 1, characterized in that the elastomeric strip (4"') is executed as a U-profile and thereby encloses the end of the hoseroll bellows (2).

8. An airspring as in one of the Claims 1 to 7, characterized in that the thickness of the elastomeric strip (4,4',4",4"') in the region of the clamping-ring (3) amounts to from 30 to 150 % of the normal thickness of the bellows, that is, referred to the unloaded state.

9. An airspring as in Claim 8, characterized in that the thickness of the elastomeric strip (4,4',4",4"') in the region of the clamping-ring (3) amounts to from 40 to 90 % of the normal thickness of the bellows, that is, referred to the unloaded state.

## Revendications

1. Ressort pneumatique, comprenant un soufflet roulant en tuyau (2) constitué en matériau élastomère, doté en particulier de supports de résistance, les extrémités du soufflet roulant à tuyau étant enfilées sur une partie de raccordement (1) et y étant fixées au moyen d'un anneau de serrage (3) déformable radialement, constitué en particulier en métal, caractérisé en ce que la partie de raccordement et/ou l'anneau de serrage sont épaissis dans la zone de l'enserrement par une bande en élastomère (4, 4', 4", 4"'), la bande en élastomère constituant un composant séparé par rapport au soufflet roulant en tuyau (2).

2. Ressort pneumatique selon la revendication 1, caractérisé en ce que l'anneau de serrage (3) présente une bande en élastomère (4) vulcanisée dans la masse ou bien rapportée et collée, tournée vers le soufflet roulant en tuyau (2).

3. Ressort pneumatique selon la revendication 1, caractérisé en ce qu'entre le soufflet roulant à tuyau (2) et la partie de raccordement (1) se trouve une bande en élastomère (4') qui s'insère en particulier dans une gorge ménagée dans la partie de raccordement.

4. Ressort pneumatique selon la revendication 3, caractérisé en ce que la bande en élastomère (4') est collée à la partie de raccordement (1).

5. Ressort pneumatique selon la revendication 1, caractérisé en ce que l'anneau de serrage (3) présente une bande en élastomère (4") entourant par une collerette l'anneau de serrage (3) et tournée alors vers le soufflet roulant en tuyau (2).

6. Ressort pneumatique selon la revendication 5, caractérisé en ce que la bande en élastomère (4") est collée à l'anneau de serrage (3).

7. Ressort pneumatique selon la revendication 1, caractérisé en ce que la bande en élastomère (4'") est réalisée sous la forme de profilé en U et entoure alors l'extrémité du soufflet roulant en tuyau (2).

8. Ressort pneumatique selon l'une des revendications 1 à 7, caractérisé en ce que l'épaisseur de la bande en élastomère (4, 4', 4", 4"') dans la zone de l'anneau de serrage (3) est de 30% à 150% de l'épaisseur normale du soufflet, et précisément en se référant à l'état non-chargé.

9. Ressort pneumatique selon la revendication 8, caractérisé en ce que l'épaisseur de la bande en élastomère (4, 4', 4", 4"') dans la zone de l'anneau de serrage (3) est de 40 à 90 % de l'épaisseur normale du soufflet, et précisément en se référant à l'état non-chargé.
